# EUROPÄISCHE PATENTSCHRIFT

(11) **EP 0 645 556 B1**
(45) Veröffentlichungstag und Bekanntmachung des Hinweises auf die Patenterteilung: **08.01.1997**
(21) Anmeldenummer: 94110702.1
(22) Anmeldetag: 09.07.1994
(51) Int. Cl.: F16F 13/14, B60G 7/02

(54) **Hülsengummifeder für Lagerungen in einem Kraftfahrzeug**
Rubber support bushing in a motor vehicle
Manchon élastique pour supports de véhicule automobile

(30) Priorität: 23.09.1993 DE 4332367
(43) Veröffentlichungstag der Anmeldung: 29.03.1995
(73) Patentinhaber: LEMFOERDER METALLWAREN AG., D-49441 Lemförde (DE)
(72) Erfinder: Meyering, Frank, D-49393 Lohne (DE); Sprang, Rüdiger, D-49179 Ostercappeln (DE); Vossel, Andreas, D-49086 Osnabrück (DE)

(56) Entgegenhaltungen:
- DE-A- 2 841 505
- DE-A- 4 020 713
- DE-A- 4 233 705
- DE-C- 4 137 692
- GB-A- 2 193 553

## Beschreibung

Die Erfindung betrifft eine Hülsengummifeder für Lagerungen in einem Kraftfahrzeug nach dem Oberbegriff des Patentanspruches 1.

Diese Merkmale einer Hülsengummifeder sind aus der DE 40 20 713 -C2- bekannt. Die Absperrung in dem Überströmkanal wird durch eine Gummileiste am Gummikörper gebildet, die lose gegen eine radial verformbare Gegenfläche des Außenrohres liegt, wobei das Ausmaß dieser Verformungen sich durch die Wegamplitude der auftretenden Schwingungen ergibt. Bei plötzlich auftretenden großen radialen Einfederungen und dadurch schlagartig ansteigendem Innendruck in der einen Kammer wird durch diese Verformung ein Überströmen von Flüssigkeit aus dieser Kammer in die andere Kammer ermöglicht. Anderenfalls würden die Drosselverluste im Drosselkanal derart ansteigen, daß Flüssigkeit nicht mehr durch den Drosselkanal verdrängt wird, so daß die Kammerwände aufgebläht und eventuell platzen würden, so daß die Hülsengummifeder zerstört wird. Die Elastizität der Absperrung in dem Überströmkanal wird in der Regel so ausgelegt, daß sie bei einem vorbestimmten Kammerinnendruck öffnet.

Anstelle eines verformbaren Außenrohres ist aus der DE 28 41 505 -C2- eine elastische Überströmlippe in dem Überströmkanal zwischen den beiden Kammern bekannt. Bei solchen Überströmlippen entsteht jedoch in Abhängigkeit von der Amplitude und der Frequenz der Schwingung ein mehr oder weniger großer Öffnungsquerschnitt. Für die dynamische Funktion der Hülsengummifeder bedeutet dies einen zusätzlichen Überströmkanal mit einem mehr oder weniger unkontrolliert großen Öffnungsquerschnitt, wodurch die geforderten dynamischen Eigenschaften der Hülsengummifeder erheblich beeinflußt werden.

Es ist Aufgabe der Erfindung, die Absperrung des Überströmkanals so auszubilden, daß ungewollte Verschiebungen des Dämpfungsmaximums und somit der dynamischen Steifigkeit der Hülsengummifeder vor allem bei stärkeren Einfederungen vermieden werden.

Zur Lösung dieser Aufgabe ist erfindungsgemäß eine Ausbildung mit Merkmalen nach dem Kennzeichen des Patentanspruches 1 vorgesehen.

Diese Ausbildungsmerkmale ermöglichen eine Gestaltung der Absperrung des Überströmkanals zur kontrollierten Öffnung des Überströmkanals beim Druckanstieg, so daß bei geringem Druck in der Flüssigkeitskammer die Dichtlippen des Überströmkanals geschlossen bleiben und bei größerem Druck eine vorherbestimmbare Öffnung des Überströmkanals erfolgt, so daß Flüssigkeit aus der einen Kammer in die andere Kammer verdrängt wird. Der dabei entstehende Öffnungsquerschnitt im Überströmkanal harmoniert in der dynamischen Gesamtabstimmung des Lagers mit dem Drosselkanal.

Vorzugsweise sind in der Absperrung des Überströmkanals wenigstens zwei Dichtlippen mit einer eventuell unterschiedlichen Profilierung vorgesehen. Die Hakenprofile der Dichtlippen können gegensinnig oder gleichsinnig gerichtet sein. Eventuell sind unterschiedliche Steifigkeiten der Dichtlippen nicht nur durch unterschiedliche Profilierung, sondern auch durch unterschiedliche Materialelastizität zu erreichen. Bei einer besonderen Ausführungsform der Erfindung ist ein Überströmkanal oder sind mehrere Überströmkanäle sowohl auf der Seite des Drosselkanals als auch auf der diametral gegenüberliegenden Seite angeordnet.

Ein Ausführungsbeispiel der Erfindung ist auf der Zeichnung dargestellt. Es zeigen:
- Figur 1: einen Schnitt nach der Linie I - I in Figur 2,
- Figur 2: einen Schnitt nach der Linie II - II in Figur 1,
- Figur 3: eine im Maßstab vergrößerte perspektivische Ansicht des Gummikörpers und
- Figur 4: eine im Maßstab gegenüber Figur 3 nochmals vergrößerte Teilansicht der Dichtlippenausbildung.

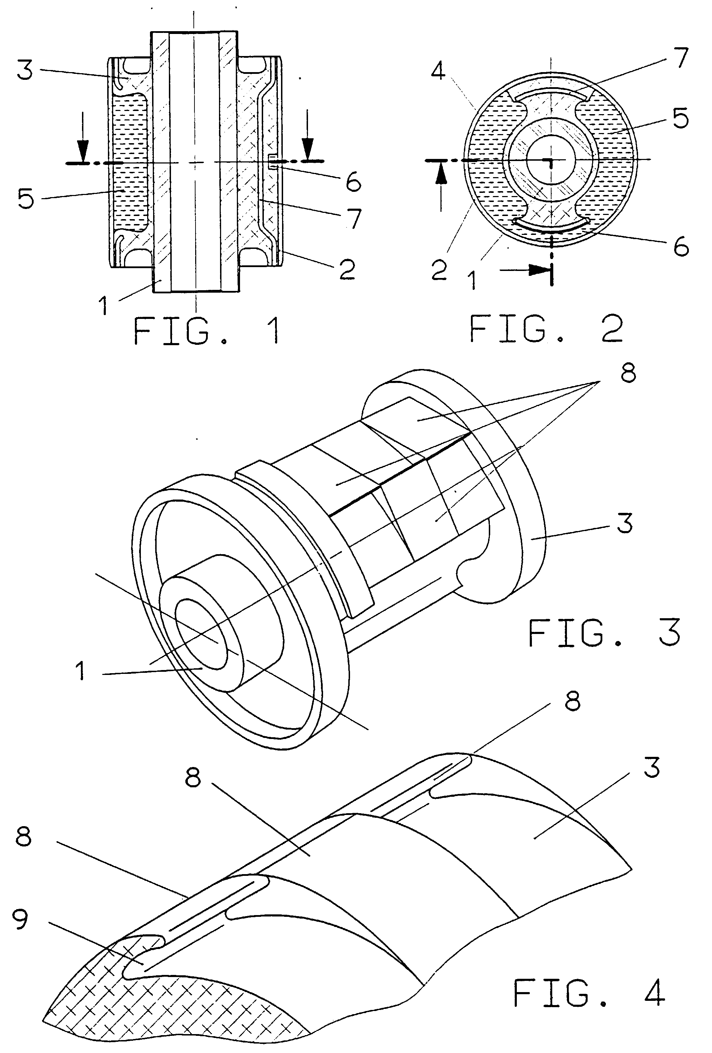

Die Hülsengummifeder nach dem Ausführungsbeispiel besteht aus einem Innenrohr 1, einem Außenrohr 2 und einem dazwischen angeordneten Gummikörper 3. In dem Gummikörper 3 sind zwei mit einem hydraulischen Dämpfungsmittel gefüllte Kammern 4 und 5 ausgebildet, die durch einen Drosselkanal 6 miteinander verbunden sind. In dem radial äußeren Bereich des Gummikörpers 3 ist eine Zwischenhülse 7 eingebettet, welche im Bereich der mit Flüssigkeit gefüllten Kammern 4 und 5 Ausschnitte aufweist und die zwischen sich und dem Außenrohr 2 den Drosselkanal 6 einschließt. Der Werkstoff des Gummikörpers 3 erstreckt sich auch zwischen der Zwischenhülse 7 und dem Außenrohr 2, die beide kraftschlüssig mit dem Gummikörper 3 verbunden ist. Zwischen den beiden mit Flüssigkeit gefüllten Kammern 4 und 5 ist weiterhin wenigstens ein Überströmkanal mit einer Absperrung aus Dichtlippen 8 vorgesehen, welche in den Figuren 3 und 4 vergrößert dargestellt sind. Die die Absperrung des Überströmkanals bildenden Dichtlippen 8 sind im Querschnitt einer Radialebene mit einem Hakenprofil ausgebildet, welches durch eine radiale Unterhöhlung 9 entstanden ist. Die durch das Hakenprofil und die Unterhöhlung 9 gebildete Dichtlippe 8 liegt gegen die Innenfläche des Außenrohres 2 an. Bei einer Steigerung des Innendruckes in einer der Kammern 4 bzw. 5 löst sich die Dichtlippe von der Innenfläche des Außenrohres und gibt einen vorbestimmbaren zusätzlichen Querschnitt für den Druckausgleich zwischen den beiden Kammern 4 und 5 frei. Zur Feinabstimmung der dynamischen Eigenschaften der Hülsengummifeder sind mehrere voneinder getrennte Dichtlippen mit unterschiedlichem Profil und unterschiedlicher Steifigkeit angeordnet und entsprechend wirksam. Bei der Ausführungsform gemäß der zeichnerischen Darstellung besteht die Geometrie dieser Dichtlippen 8 aus zwei voneinander getrennten und somit je für sich nachgiebigen Dichtlippen, welche gleichsinnig oder auch gegensinnig gerichtet angeordnet sein können. Durch die Unterhöhlung der Dichtlippen 8 in radialer Richtung sind die Dichtlippen 8 auf die Bauteilmittelachse hin verformbar. Zur kontrollierten Öffnung der Absperrung in dem Überströmkanal bei Druckanstieg ist das Verhältnis zwischen der Dicke, der Länge und der Form der Unterhöhlung 9 der Dichtlippe 8 so zu wählen, daß bei geringem Druck die Dichtlippen verschlossen bleiben und die Dämpfungsflüssigkeit lediglich durch den Drosselkanal von der einen in die andere Kammer verdrängt wird. Bei größerem Innendruck öffnen sich die Dichtungslippen kontrolliert entsprechend der gewählten Abstimmung, wobei der hierdurch entstehende Öffnungsquerschnitt in die dynamische Gesamtabstimmung der Hülsengummifeder mit dem Drosselkanal harmonisch integriert ist.

### BEZUGSZEICHENLISTE:

- 1: Innenrohr
- 2: Außenrohr
- 3: Gummikörper
- 4: Kammer
- 5: Kammer
- 6: Drosselkanal
- 7: Zwischenhülse
- 8: Dichtlippe
- 9: Unterhöhlung

## Patentansprüche

1. Hülsengummifeder für Lagerungen in einem Kraftfahrzeug, bei der ein Gummikörper zwischen einem Innenrohr und einem Außenrohr angeordnet ist und wenigstens zwei mit einem flüssigen Dämpfungsmittel gefüllte Kammern vorgesehen sind, die durch einen Überströmkanal mit einer sich erst bei einer vorbestimmten Druckdifferenz in den Kammern öffnenden Absperrung aus einer sich axial erstreckenden, einstückig an den Gummikörper angeformten Dichtung miteinander verbunden sind, dadurch gekennzeichnet, daß die Dichtung der Absperrung des Überströmkanals aus mindestens zwei voneinander getrennte, im Querschnitt ein Hakenprofil mit einer radialen Unterhöhlung aufweisenden, radial zur Mittelachse der Hülsengummifeder verformbaren Dichtlippen (8) besteht.

2. Hülsengummifeder nach Anspruch 1, dadurch gekennzeichnet, daß das System in Verbindung mit einem ständig offenen Drosselkanal (6) ausgebildet ist.

3. Hülsengummifeder nach den Ansprüchen 1 und 2, dadurch gekennzeichnet, daß das Hakenprofil der Dichtlippen (8) gegensinnig gerichtet angeordnet ist.

4. Hülsengummifeder nach einem oder mehreren der Ansprüche 1 bis 3, dadurch gekennzeichnet, daß die Dichtlippen (8) unterschiedlich profiliert und mit unterschiedlicher Steifigkeit ausgebildet sind.

5. Hülsengummifeder nach einem oder mehreren der Ansprüche 1 bis 4, dadurch gekennzeichnet, daß Dichtlippen (8) in Überströmkanälen sowohl auf der Seite des Drosselkanals (6) als auch auf der diametral dazu gegenüberliegenden Seite angeordnet sind.

## Claims

1. Rubber sleeve spring for mountings in a motor vehicle, in which a rubber body is disposed between an inner tube and an outer tube, and at least two chambers filled with a liquid damping medium are provided, which chambers are connected together via an overflow channel with a shutoff device which only opens when there is a predetermined pressure difference in the chambers and consists of an axially extending seal which is moulded onto the rubber body in one piece, characterised in that the seal of the shutoff device of the overflow channel consists of at least two sealing lips (8) which are separate from one another, have a hook profile with a radial undercut in cross section and can be deformed radially with respect to the centre axis of the rubber sleeve spring.

2. Rubber sleeve spring according to claim 1, characterised in that the system is formed in conjunction with a constantly open throttle channel (6).

3. Rubber sleeve spring according to claims 1 and 2, characterised in that the hook profiles of the sealing lips (8) point in opposite directions.

4. Rubber sleeve spring according to one or more of claims 1 to 3, characterised in that the sealing lips (8) have different profiles and different degrees of rigidity.

5. Rubber sleeve spring according to one or more of claims 1 to 4, characterised in that sealing lips (8) are disposed in overflow channels both on the side of the throttle channel (6) and on the side lying diametrically opposite this side.

## Revendications

1. Manchon élastique en caoutchouc pour des supports dans un véhicule automobile, dans lequel un corps en caoutchouc est disposé entre un tube interne et un tube externe, et dans lequel au moins deux chambres, remplies avec un agent liquide d'amortissement, sont prévues, les chambres étant reliées l'une à l'autre par une conduite de trop plein comprenant un organe d'arrêt réalisé par un joint d'étanchéité formé d'une seule pièce sur le corps en caoutchouc et s'étendant axialement par rapport à celui-ci, l'organe d'arrêt s'ouvrant seulement à partir d'une différence prédéterminée de pression régnant dans les chambres, caractérisé en ce que le joint d'étanchéité de l'organe d'arrêt de la conduite de trop plein est réalisé par au moins deux lèvres d'étanchéité séparées l'une de l'autre, présentant en coupe transversale un profil en forme de crochet comportant un espace creux radial, et pouvant être déformées radialement par rapport à l'axe médian du manchon élastique en caoutchouc.

2. Manchon élastique en caoutchouc selon la revendication 1, caractérisé en ce que le système est réalisé en combinaison avec une conduite (6) d'étranglement toujours ouverte.

3. Manchon élastique en caoutchouc selon les revendications 1 et 2, caractérisé en ce que les profils en forme de crochet des lèvres (8) d'étanchéité sont montés dans des sens opposés deux à deux.

4. Manchon élastique en caoutchouc selon l'une ou plusieurs revendications 1 à 3, caractérisé en ce que les lèvres (8) d'étanchéité sont profilées de manière différente et sont réalisées avec une rigidité différente.

5. Manchon élastique en caoutchouc selon l'une ou plusieurs des revendications 1 à 4, caractérisé en ce que les lèvres (8) d'étanchéité sont disposées dans des conduites de trop plein aussi bien sur le côté de la conduite (6) d'étranglement que sur le côté diamétralement opposé à celle-ci.
